# EUROPEAN PATENT APPLICATION

(11) **EP 3 432 540 A1**
(43) Date of publication of application: **23.01.2019**
(21) Application number: 17305966.8
(22) Date of filing: 20.07.2017
(51) Int. Cl.: H04L 29/06

(54) **ACCESS CONTROL DEVICE AND METHOD**

(71) Applicant: Thomson Licensing, 92130 Issy-les-Moulineaux (FR)
(72) Inventor: ONNO, Stéphane, 35576 Cesson-Sévigné (FR); BERTOLINO, Matteo, 5576 Cesson-Sévigné (FR)
(74) Representative: Vidon Brevets & Stratégie

(57) **Abstract**

Method and device (320) for controlling access to a service. At the device (320), a hardware interface (123) receivies (S210) from a requesting device having an identity a request to access the service, and at least one hardware processor (121) retrieves (S220) from a plurality of access rules each comprising an expression for the service, an identifier of at least one device to which the access rule applies and an indication whether the access rule allows or denies access to the service, access rules matching the service and the identity of the requesting device, obtains (S230), for each retrieved access rule, a value for the expression and applies (S250) the access rule corresponding to the highest value to allow or deny the requesting device access to the service.

## Description

### TECHNICAL FIELD

The present disclosure relates generally to network security and in particular to access control in networks.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

An Access Control List (ACL) is a widely used way in computer networks to specify access control rules that define privileges for entities, i.e. users, programs or devices, to use services. For example, a filesystem ACL conventionally describes access rights for files such as "read", "write" and "execute", and a networking ACL conventionally describes whether or not a user or device may access a port or IP address at, for instance a router or a switch. Upon reception of a request to access the service, a device may then consult the ACL to determine if the requesting entity should be given access or not.

An ACL may include a whitelist detailing allowed entities, a blacklist detailing banned entities, or both.

A problem with ACLs is that it can be necessary to provide an access control rule for each service for each entity. This can be very time-consuming, especially if there are many services and entities.

A solution to this problem is to use wildcards, conventionally denoted by asterisks, that correspond to every possibility for a given feature. An example is:

```
       /network1/printers/*/print client1 Allow
```

to indicate that client1 is allowed to print on all (indicated by the asterisk) printers in network1.

However, the use of wildcards may lead to inconsistencies that arise if two access control rules contradict one another. For example, the following three rules are in contradiction:

```
       /home1/kitchen/*/* Client2 Allow
       /home1/kitchen/temperature/* Client2 Deny
       /home1/kitchen/*/room_temperature Client2 Allow
```

As can be seen, for Client2, the first rule allows everything in the kitchen, the third rule allows accessing the room temperature in the kitchen, while the second rule denies access to any temperature in the kitchen.

There are conventional methods for solving such conflicts, such as:
- Permit override: access is allowed as long as at least one applicable access control rule allows access.
- Deny override: access is denied as long as at least one applicable access control rule denies access.
- First applicable: the first applicable rule in the ACL is used.
- Majority: if there are more rules going in one direction than in the other, these rules apply.

The skilled person will appreciate that even when using these, the outcome may not always be the one intended by the one who created the ACL.

In the field of network routing, Longest Prefix Match (LPM) is conventionally used to allow wildcards. However, LPM conventionally only makes it possible to have the wildcards on the righthand side, such as 10.10.*.* or 10.10.10.*, but it is not possible to have wildcards in the middle, for example 10.*.10.1. As such, LPM cannot be used to implement the third rule above, namely

```
/home1/kitchen/*/room_temperature Client2 Allow.
```

It will be appreciated that it is desired to have a solution that overcomes at least part of the conventional problems related to wildcards in access control rules in Access Control Lists.

### SUMMARY OF DISCLOSURE

In a first aspect, the present principles are directed to a method for controlling access to a service. A controlling device receives, at a hardware interface, a request from a requesting device to access the service, the requesting device having an identity, at least one hardware processor retrieves from a plurality of access rules each including an expression for the service, an identifier of at least one device to which the access rule applies and an indication whether the access rule allows or denies access to the service, access rules matching the service and the identity of the requesting device, obtains, for each retrieved access rule, a value for the expression, and applies the access rule corresponding to the highest value to allow or deny the requesting device access to the service.

Various embodiments of the first aspect include:
- That the at least one hardware processor compares the obtained values to find the highest value.
- That the act of obtaining includes calculating the value by the at least one hardware processor.
- That each expression includes a number of hierarchical elements, the value calculated through multiplication or addition of numbers respectively applied to each element. The number for an element can be equal to one in case the element is a wildcard and equal to a level value dependent on a level in the hierarchy of the element otherwise. A level value of a hierarchically lower level can be greater than a product of the level values of hierarchically higher levels.
- That the expression includes at least one element of an explicitly named type, the element's place in the hierarchy being determined by the named type.

In a second aspect, the present principles are directed to a device for controlling access to a service. The device includes a hardware interface configured to receive a request from a requesting device to access the service, the requesting device having an identity and at least one hardware processor configured to retrieve from a plurality of access rules each including an expression for the service, an identifier of at least one device to which the access rule applies and an indication whether the access rule allows or denies access to the service, access rules matching the service and the identity of the requesting device, obtain, for each retrieved access rule, a value for the expression, and apply the access rule corresponding to the highest value to allow or deny the requesting device access to the service.

Various embodiments of the second aspect include:
- That the at least one hardware processor is configured to compare the obtained values to find the highest value.
- That the at least one hardware processor is configured to obtain the value for the expression by calculating the value.
- That each expression includes a number of hierarchical elements, the value calculated through multiplication or addition of numbers respectively applied to each element. The number for an element can be equal to one in case the element is a wildcard and equal to a level value dependent on a level in the hierarchy of the element otherwise. A level value of a hierarchically lower level can be greater than a product of the level values of hierarchically higher levels.

In a third aspect, the present principles are directed to a computer program including program code instructions executable by a processor for implementing the steps of a method according to any embodiment of the first aspect.

In a fourth aspect, the present principles are directed to a computer program product which is stored on a non-transitory computer readable medium and includes program code instructions executable by a processor for implementing the steps of a method according to any embodiment of the first aspect.

### BRIEF DESCRIPTION OF DRAWINGS

Features of the present principles will now be described, by way of non-limiting example, with reference to the accompanying drawings, in which:
Figure 1 illustrates an exemplary system according to an embodiment of the present principles;
Figure 2 illustrates a method of access determination according to an embodiment of the present principles;
Figure 3 illustrates functionally a generic Information-Centric Networking (ICN) network.

### DESCRIPTION OF EMBODIMENTS

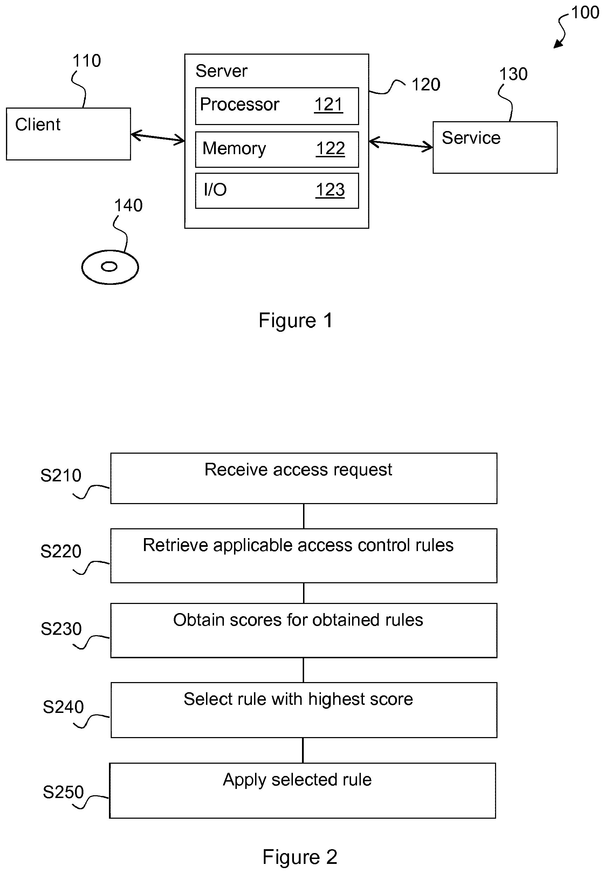

Figure 1 illustrates an exemplary system 100 according to a first embodiment of the present principles. The system 100 comprises a client device 110, a server 120 and a device 130 providing a service. Naturally, there may be a plurality of client devices, devices providing a service and, indeed, servers.

Non-limitative examples of the client device 110 are a conventional computer, a mobile phone, a tablet, a set-top box and an alarm system. Non-limitative examples of the server 120 are a gateway in a home network and a dedicated permission server in a Local Area Network (LAN). Non-limitative examples of the device 130 providing the service are a conventional computer, a mobile phone, a tablet, a set-top box and a sensor (configured to detect, for example, movement, temperature or whether a lamp is switched on or off). The service provided by the device 130 can for example be access to one or more files, delivery of at least one piece of information (such as temperature) and modification of a state of a device (for example switching on or off a light). The server 120 can be implemented on the device 130 providing the service.

The server 120 includes at least one hardware processing unit ("processor") 121, memory 122 and communication interfaces 123 configured for communication with at least one of the client device 110 and the device 130 providing the service (the communication interfaces 123 could be implemented as a single physical interface). The skilled person will appreciate that the illustrated server is very simplified for reasons of clarity and that real devices in addition would include features such as internal connections and power supplies. Non-transitory storage media 140 stores instructions that, when executed by a processor, perform the functions of the server 120 for controlling access to a service as further described hereinafter.

The server 120 further has access to an Access Control List (ACL) including at least one access control rule. The ACL is preferably stored in the memory 122, but it can also be stored in other memory accessible by the server 120, such as for example in a device with which the server 120 can establish a connection.

The access control rules are preferably stated using a plurality of segments from least specific to most specific, as follows:

```
       //node0/node1/.../nodeN/Object, ClientID, Allow/Deny
```

A node can for example be a directory or a hierarchical level, while Object can be a resource such as a file or other service such as provision or setting of temperature, as will be seen hereinafter. ClientID identifies the client for whom the access rule applies. Allow/Deny is either Allow or Deny and defines whether or not ClientID should be given access to object.

Figure 2 illustrates a method of access determination according to an embodiment of the present principles. The method involves using rules to quickly and decisively determine access in a manner not performed by humans prior to the present disclosure. The improvement disclosed herein enables a processor to utilize rules to improve decision making as to the grant or denial of access using previously undisclosed rules that are not conducted by human activity.

In step S210, the processor 121 of the server 120 receives from the client device 110 an access request for a service. The request can for example be a HTTP or HTTPS message, or a request to access a file in a file tree, but as will be further described it can also be a so-called interest (or request) in an Information-Centric Networking (ICN) network.

In step S220, the processor 121 of the server 120 retrieves access control rules applicable to the access request. The access control rules can be retrieved from the memory 122 of the server or from storage external to the server 120. An access control rule is applicable in case it pertains to the service and to the client device from which the request was received. It is noted that an access control rule can include one or more wildcards, both for the hierarchical list detailing the service and for the client devices.

In step S230, the processor 121 of the server 120 obtains a score for each applicable access control rule. The score of a rule can be precalculated and stored with the access control rule or its identifier (e.g. in memory 122 of the server 120 or in external storage), but the score can also be calculated when the an access request has been received. The skilled person will appreciate that various conventional ways, such as caches, can be used for the scores, and the score for a rule can be calculated the first time the rule is retrieved and the score can then be stored with the rule.

The score is preferably calculated from all the segments of the access control rule; the segments can include the client identifier ClientID in case wildcards are used for the clients. The score is calculated using arithmetic operations on operands whose values depend on the values of the segments.

In a preferred embodiment, the operands are multiplied to obtain the scores. The value of an operand depends on both the value of the segment (i.e. if it is a wildcard or not) and on a segment depth value: if the value of the segment is a wildcard, then the operand is given the value 1, otherwise it is given the segment depth value.

The segment depth values are preferably given so that the value at a given depth is greater than the product of the preceding (higher) segment depth values. A non-limitative example will now make this clear.

Given six segments /A/B/C/D/E/F, the depth values can be given as follows:
- A: 2 (to distinguish from the wildcard value)
- B: A + 1 = 3
- C: (A * B) + 1 = 7
- D: (A * B * C) + 1 = 43
- E: (A * B * C * D) + 1 = 1807
- F: (A * B * C * D * E) + 1 = 3263443.

A reason for this distribution is to attribute value to the more 'precise', i.e. to deeper segments. If, for instance, a specific resource is named in segment E of the access control rule, then it has greater weight than any rule that does not specify the resource. For example, the rule /A/B/C/D/E/* has a score of 2*3*7*43*1807*1 = 3263442, while the rule /*/*/*/*/*/F has a score of 1*1*1*1*1*3263443 = 3263443.

As can be seen, using the values of the example, an equality is possible only in case two access control rules have specific values for the same segments.

Naturally, A can be given a greater segment depth value than 2, in which case the other segment depth values are changed accordingly.

In a variant, the operands are added together to obtain a sum that is the score of the rule. The segment depth values can be given in an analogous manner to ensure that a more specific segment depth value always is greater than the sum of the preceding, less specific, segments.

Given the six segments /A/B/C/D/E/F, the depth values can be given as follows:
- A: 2 (to distinguish from the wildcard value)
- B: A + 1 = 3
- C: A + B + 1 = 6
- D: A + B + C + 1 = 12
- E: A + B + C + D + 1 = 24
- F: A + B + C + D + E + 1 = 48.

In step S240, the processor of the server 120 selects the access control rule with the highest obtained score. In case of an equality, something that as mentioned can happen if the same segments have been defined for a plurality of rules, any suitable conventional prior art method can be used to select the access control rule that should be applied. Some such conventional methods - such as "permit override," "deny override" and "first applicable" - have been described in the background section of the application.

In step S250, the processor of the server 120 applies the selected access control rule and thus allows or denies access.

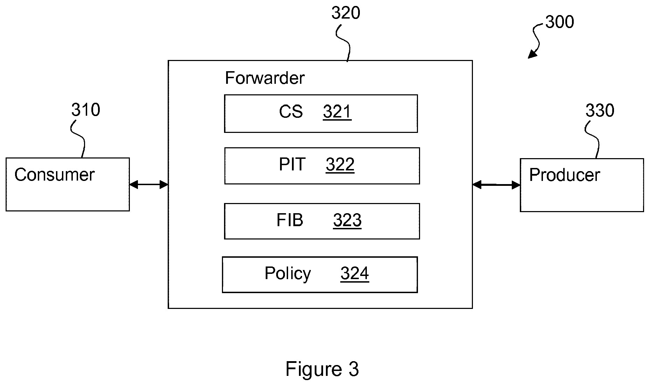

The present principles will now be further illustrated using Information-Centric Networking (ICN) as a non-limitative example. Figure 3 illustrates functionally a generic ICN network 300 with a requesting node ("Consumer") 310, an intermediate router node ("Forwarder") 320 and a node 330 that provides information or other kind of service ("Producer").

The Forwarder 320 includes a content store ("CS") 321, a Pending Interest Table ("PIT") 322, a Forwarding Information Base ("FIB") 323 and a Forwarding strategy module 324.

The CS 321 is a data cache, the PIT 322 stores for forwarded "Interests" that have not yet been satisfied, a data name and incoming and outgoing interfaces, the FIB 323 is a routing table that maps names to interfaces, and the forwarding strategy module is a set of policies and rules related to forwarding of packets.

In this example an "Interest packet" is a request for data, but it should be noted that in the general case, an Interest could, for example, also be an instruction to a Producer to perform an action.

When the Forwarder 320 receives an Interest packet (i.e. a request for data) from the Consumer 310, it can first check if the requested data is stored in the CS 321. If so, the Forwarder 320 returns the data to the Consumer 310 in a Data packet.

If the CS 321 does not store the data, it adds entries to the PIT 322 and the FIB, and routes the Interest packet to the Producer 330.

The Producer 330 generates a Data packet with the requested data and sends the Data packet to the Forwarder 320. The Forwarder 320 checks whether the PIT 322 includes a corresponding Interest. If this is not the case, then the Forwarder 320 discards the Data packet, but if the PIT 322 does store a corresponding Interest, then the PIT 322 deletes the Interest, the CS 321 stores the data, and the Data packet is sent to the Consumer 310.

The access control of the present principles is preferably implemented before the output interface of the CS 321 to ensure that no data is sent to the Consumer 310 in case access is denied.

In a more specific example, a plurality of home networks connects an ICN Network (e.g. on the cloud) through individual ICN enabled gateway. Each home advertises a number of sensor nodes, i.e. producer nodes, and a home owner configures access to producer nodes using rules of the following format:

```
       uri:acl//owner_home/room/sensor_type/sensor_name/ClientID
```

Similarly, an access request from a consumer node has the following format:

```
       uri://owner_home/room/sensor_type/sensor_name/ClientID
```

It is noted that the ClientID in an access request preferably includes a signature of the corresponding client, which permits verification that the access request came from the purported client.

It is further noted that a group of users can share a ClientID by sharing the cryptographic element used for verification of the identity. The skilled person will appreciate that the verification of the individual identity or the group identity can rely on various appropriate cryptographic algorithm or digital signature including means to share and distribute cryptographic elements securely.

The gateway of each home stores an ACL that for example includes the following access control rules (note that since the gateway stores rules for the home, it is not necessary to include the 'owner_home' segment as it is implicit that the rules apply to the home in question):

```
       1:/kitchen/*/*/Client2, Allow
       2:/kitchen/temperature/*/Client2, Deny
       3:/*/*/room_temperature/Client2, Allow
       4:/*/*/room_temperature/*, Allow
       5:/*/temperature/*/Client2, Deny
       6:/*/*/central_light/Client2, Deny
       7:/living room/*/*/Client2, Allow
```

The score of each rule is obtained as follows, using the preferred embodiment already described with the segment depth values 2, 3, 7 and 43:

```
       1: 2*1*1*43=86
       2: 2*3*1*43=258
       3: 1*1*7*43=301
       4: 1*1*7*1=7
       5: 1*2*1*43=86
       6: 1*1*7*43=301
       7: 2*1*1*43=86
```

As can be seen, two rules, 3 and 6, have the same score, 301. However, since rule 3 allows Client2 access to or modification of any room_temperature and rule 6 denies Client2 access to or modification of any central light, these two rules are mutually exclusive and both will thus not be retrieved for any given access request from Client2.

Thus, in case the access request from Client2 is to retrieve the temperature in the kitchen, then rules 1-5 apply and access is given since rule 3 has the highest score.

A variant embodiment can allow more compact access rules and access requests through the use of named segments. In addition, named segments can allow freer expression of access rules and access requests, since a named segment need not be located in order. A segment is named using a segment name and, preferably, an escape character, e.g. '=' ("equal to"), but another special, non-alpha-numeric characters could also be used.

The processor 120 of the server interprets an access rule or access request with one or more named segments in the following way:
1. Each named segment is put in its place in the hierarchical order.
2. Any segment without data is interpreted as a wildcard.

In a further variant, the hierarchical expression is combined with named segments. The processor 120 of the server interprets an access rule or access request with one or more named segments in the following way:
1. Until a named segment is found, the expression is parsed from the top and each segment is put in the hierarchical order.
2. Each named segment is put in its place in the hierarchical order.
3. Any segments without data is interpreted as a wildcard.

For example, if the general structure of an access rule is:

```
       //owner_home/room/sensor_type/sensor_name/ClientID,
```

the access rule

```
       //houseAlice/kitchen/SENSOR=window_sensor/Bob
```

will, since the sensor type segment was omitted, be interpreted as

```
//houseAlice/kitchen/*/window_sensor/Bob
```

Once an access rule or an access request with named segments has been interpreted, it can then be used to enable or deny an access request as previously described.

It has already been mentioned that if wildcards are not allowed at a specific segment, for example for the client, then the score can be calculated without this segment since the segment will never be differentiating.

It should be noted that if an access request comprises a wildcard, then the access request relates to all possible combinations. For example, if the access request comprises a wildcard in the 'home' segment, then the cloud server that receives the access request will send the access request to each home that has advertised services on the cloud server. Similarly, a wildcard in the 'room' segment will cause an access request to split into a separate access request for each room. The forwarded access requests can be resolved, i.e. the cloud server can replace the wildcard with the identifier of each home. Similarly, a home gateway that receives an access request with a wildcard breaks down the request into all possibilities, which depends on the segment.

As will be appreciated, the present disclosure can enable more efficient resolution of access requests when access control rules include wildcards.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

## Claims

1. A method for controlling access to a service, the method comprising at a controlling device (320):
receiving (S210), at a hardware interface (123), a request from a requesting device to access the service, the requesting device having an identity;
retrieving (S220), by at least one hardware processor (121), access rules matching the service and the identity of the requesting device from a plurality of access rules, each access rule comprising an expression for the service, an identifier of at least one device to which the access rule applies and an indication whether the access rule allows or denies access to the service;
obtaining (S230), by the at least one hardware processor (121), for each retrieved access rule, a value for the expression;
applying (S250), by the at least one hardware processor (121), the access rule corresponding to the highest value to allow or deny the requesting device access to the service.

2. The method of claim 1, further comprising comparing (S240), by the at least one hardware processor (121), the obtained values to find the highest value.

3. The method of claim 1, wherein the obtaining comprises calculating, by the at least one hardware processor (121), the value.

4. The method of claim 1, wherein each expression comprises a number of hierarchical elements, the value calculated through multiplication or addition of numbers respectively applied to each element.

5. The method of claim 4, wherein the number for an element is equal to one in case the element is a wildcard and equal to a level value dependent on a level in the hierarchy of the element otherwise.

6. The method of claim 4, wherein a level value of a hierarchically lower level is greater than a product of the level values of hierarchically higher levels.

7. The method of claim 4, wherein the expression comprises at least one element of an explicitly named type, the element's place in the hierarchy being determined by the named type.

8. A device (320) for controlling access to a service, the device comprising:
a hardware interface (123) configured to receive a request from a requesting device to access the service, the requesting device having an identity;
at least one hardware processor (121) configured to:
retrieve access rules matching the service and the identity of the requesting device from a plurality of access rules, each access rule comprising an expression for the service, an identifier of at least one device to which the access rule applies and an indication whether the access rule allows or denies access to the service;
obtain, for each retrieved access rule, a value for the expression;
apply the access rule corresponding to the highest value to allow or deny the requesting device access to the service.

9. The device of claim 8, wherein the at least one hardware processor (121) is further configured to compare the obtained values to find the highest value.

10. The device of claim 8, wherein the at least one hardware processor (121) is configured to obtain the value for the expression by calculating the value.

11. The device of claim 8, wherein each expression comprises a number of hierarchical elements, the value calculated through multiplication or addition of numbers respectively applied to each element.

12. The device of claim 11, wherein the number for an element is equal to one in case the element is a wildcard and equal to a level value dependent on a level in the hierarchy of the element otherwise.

13. The device of claim 11, wherein a level value of a hierarchically lower level is greater than a product of the level values of hierarchically higher levels.

14. Computer program comprising program code instructions executable by a processor for implementing the steps of a method according to any one of claims 1 to 7.

15. Computer program product which is stored on a non-transitory computer readable medium and comprises program code instructions executable by a processor for implementing the steps of a method according to any one of claims 1 to 7.
